# EUROPEAN PATENT SPECIFICATION

(11) **EP 2 349 765 B1**
(45) Date of publication and mention of the grant of the patent: **15.01.2014**
(21) Application number: 09815483.4
(22) Date of filing: 24.09.2009
(51) Int. Cl.: F03G 7/08, B60K 3/04, B60K 6/48, B60K 6/52, F01D 15/02, F02C 6/20, B60K 6/24

(54) **DISTRIBUTED POWER GENERATION SYSTEM FOR SURFACE TRANSPORT**
VERTEILTES STROMERZEUGUNGSSYSTEM FÜR OBERFLÄCHENTRANSPORT
SYSTÈME RÉPARTI DE GÉNÉRATION DE PUISSANCE POUR TRANSPORT DE SURFACE

(30) Priority: 24.09.2008 AU 2008904976
(43) Date of publication of application: 03.08.2011
(73) Proprietor: Power Rail Road Pty Ltd, Woollahra NSW 2025 (AU)
(72) Inventor: ALEXANDER, Nic, Woollahra, NSW 2025 (AU)
(74) Representative: Ashton, Gareth Mark
(86) International application number: PCT/AU2009/001268
(87) International publication number: WO 2010/034062

(56) References cited:
- WO-A1-98/55335
- GB-A- 223 087
- GB-A- 657 035
- US-A- 3 771 311
- US-A- 3 986 575
- US-A- 4 041 696
- US-A- 4 157 011
- US-A- 5 762 156
- US-A- 5 826 673
- US-A1- 2004 124 023
- US-A1- 2004 128 975
- DATABASE WPI Derwent Publications Ltd., London, GB; Class X13, AN 1997-023749 & FR 2 734 318 A1 (REGIE NATIONALE DES USINES RENAULT SA) 22 November 1996
- DATABASE WPI Derwent Publications Ltd., London, GB; Class Q14, AN 1987-214721 & DE 36 02 545 A1 (SCHOPF) 30 July 1987

## Description

### Field of the Invention

The present invention relates to a renewable energy, distributed power generation system for surface transport for the movement of freight and passengers, and in particular a system to store and generate power thereby reducing the amount of fossil fuels used by surface transport and fossil or nuclear fuels used for power generation. The power plant (gas/steam generator) described is typically for a distributed power generation system either surface mounted or integrated into surface transport. The potential/kinetic energy of surface transport is used to generate power and transfer this power to and from a power storage unit (PSU) either on board the vehicle or autonomously located.

### Background of the Invention

Surface transport has advantages such that it can deliver goods and services to any location without the need of major infrastructure. However, there is a need for surface transport to be more efficient in its use of fuel and energy consumption to ensure it remains cost effective. Further, with the increasing concern of global warming, high demand for oil and geo-political issues, more efficient, clean power generation systems are desirable.

Accordingly, there is a need to reduce the fossil/nuclear fuel consumed per unit of freight for surface transport. There is also a need to capture energy that is being lost from existing systems and/or the ability to transfer excess power between surface transport and power storage units.

One such system is to target a reduction in fuel and wasted energy lost in the stopping phase of surface transport (i.e. braking) and to store/transmit excess energy at declines on descent and reuse that energy at inclines on a climb.

US 2004/0128975 discloses a power generation system for a vehicle, having a compressor, a gas generator, high, intermediate, and low pressure turbines, and a heat exchanger. The turbines drive an electric generator.

US 5,762,156 discloses a turbine connected to a generator/motor. The generator/motor is connected to a flywheel and an inverter. The inverter is connected to an electric driver motor/generator, and the electric driver motor/generator is connected to vehicle wheels.

### Object of the Invention

It is an object of the present invention to substantially overcome or at least ameliorate one or more of the disadvantages of the prior art, or to at least provide a useful alternative.

### Summary of the Invention

There is provided a distributed power generation system for a surface transport vehicle as defined in any one of the appended claims.

Preferably, the distributed power generation system includes means to transfer excess energy to other surface transport from a power storage unit.

Preferably, the excess energy is transferred to a track or roadside power storage unit.

Preferably, said roadside power storage unit includes a hydro power storage tower and/or a hydro electrical power system using suitable terrain, reservoirs and piping for energy storage.

### Brief Description of the Drawings

A preferred embodiment of the invention will now be described, by way of example only, with reference to the accompanying drawings, wherein:
Figure 1 is a distributed power generation system of an embodiment of the invention;
Figure 2 is a distributed power generation system of a further embodiment of the invention;
Figure 3 shows one location of a distributed power generation device on a vehicle; and
Figure 4 shows a power transmission system.

### Detailed Description of the Preferred Embodiments

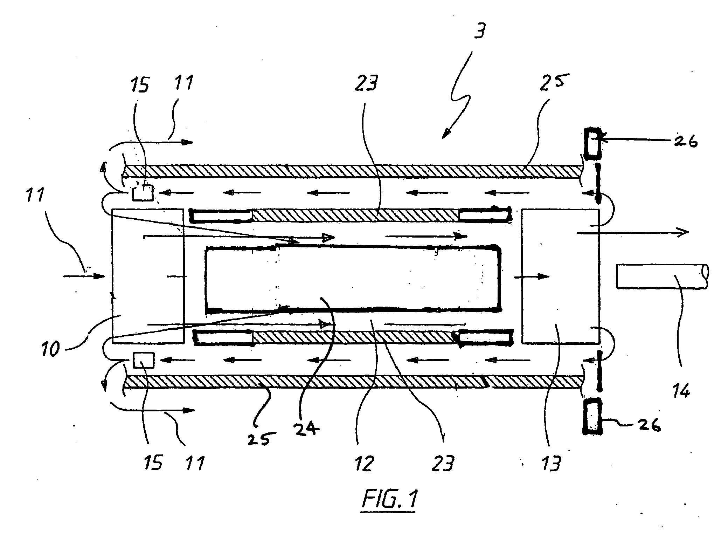

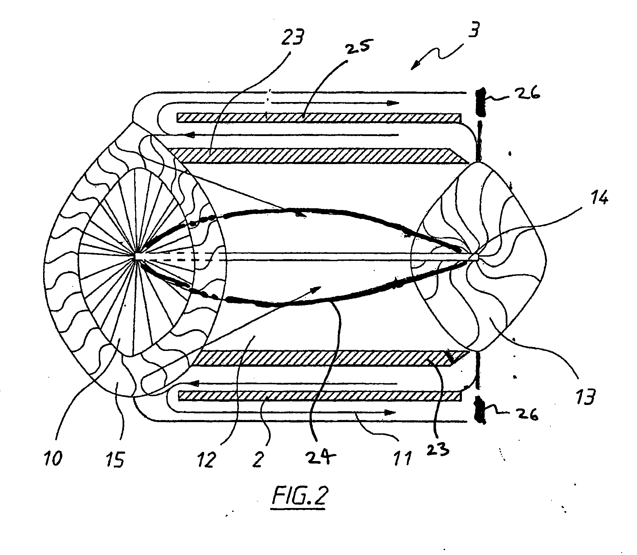

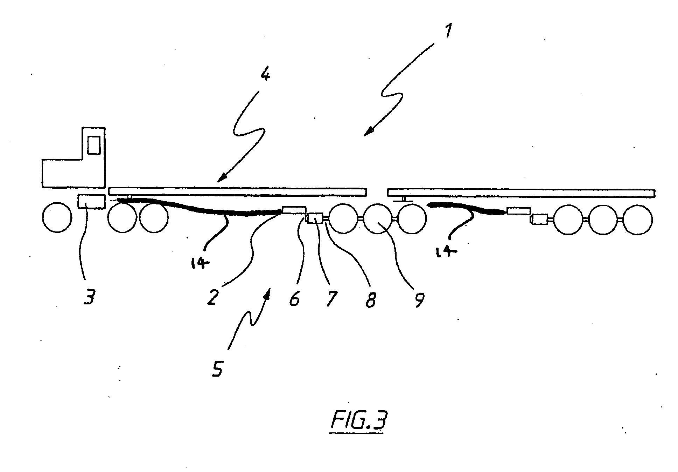

There is schematically depicted in the drawings, a distributed power generation system 1, for surface transport such as a vehicle 4 including a primary power generation device 3 to generate energy for said vehicle 4. The primary power generating device 3 includes drive (gas/steam) turbine 5 (see Figure 1) where the steam turbine 24 is preferably integrated with a heat exchanger 23 integrated into the power generation device 3. The device 3 (see Figure 2) is a thermally powered turbine device. The device 3 is a typical steam device. A secondary power generation device 5 (see Figure 3) includes an electrical generator/traction motor 7 to generate power in the power generation (stopping) phase storing this power roadside, trackside or on board in the power (pack) storage unit or to use in the power grid as demand requires or by other vehicles to use the energy in negotiating a gradient. The wheels 9 deliver torque via traction motors or a connection means (drive shaft) 8 to the power storage unit 2.

As best seen in Figures 1 and 2, the primary power generation device 3 includes a compressor 10 operable to receive a gas. The gas direction is shown by the arrows 11. A combustion chamber 12 receives and ignites a fuel and heats said gas. A turbine 13 receives the heated gas from the combustion chamber 12 and rotates the shaft 14. The gas leaving the turbine 13 is directed past the outside of the combustion chamber 12 in ducting or the like to add heat to the heat exchanger 23 forming the wall of the combustion chamber 12 for heating liquid to operate steam turbine 24. The gas passing through a second turbine 15 operatively associated with the compressor 10 is integrated as an outer ring of the compressor 10 which activates the compressor 10. The gas leaving the second turbine 15 is returned to the combustion chamber 12 or wherein the gas is vented away from the system 1 or vented through a second heat exchanger 25 and passed through a third turbine 26 operating in cooperation with the gas turbine 13, passing a heat exchanger 23 in the exhaust section. The steam turbine 24 may be co-axial with the gas turbine 13 and located with in the combustion chamber 12 surrounded by the heat exchanger 23. Secondary effects of the reverse flow exhaust system and heat exchangers will lower turbine noise and reduce exhaust gas temperatures to acceptable levels. A variable geometry air inlet and a variable geometry exhaust will be incorporated to assist in optimizing the fuel air mix and maximize energy transfer to the heat exchanger 23 which drives the steam turbine 24. It should be understood that the system can work equally on the prime mover/locomotor and/or the load carrying devices, be integrated into many other parts of the surface transport, or be mounted roadside or trackside.

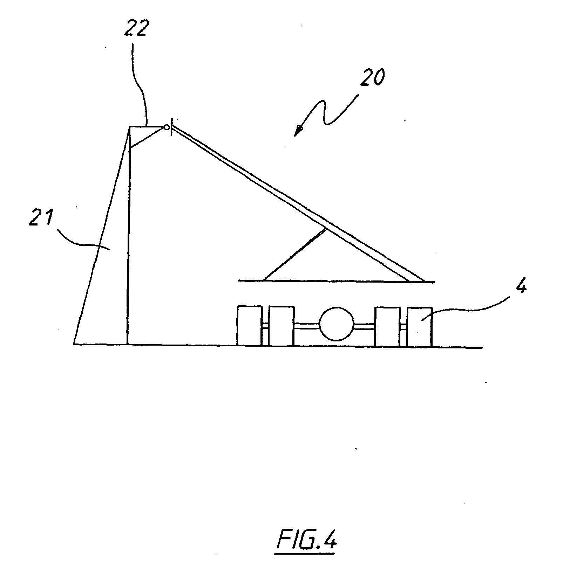

In Figure 4 is shown a power transmission system 20 for a vehicle 4. The system 1, at item 2 on Figure 3, provides onboard energy storage during the power generation process. In extended power generation phases (downhill) this energy would have to be stored in a power storage unit mounted roadside, trackside or a power (pack) storage unit used in the power grid as demand requires by other vehicles to use the energy in negotiating a gradient or the like 2. A tower 21 supporting an overhead power line 22 or the like would be required to transmit the energy between vehicles 4. An Energy Management Control Computer (EMC²_{TM} not shown) would be used. This would include a GPS and an elevation (potential energy) algorithm assessing the onboard power required at trip planning or the end of power usage or power generation phases of a vehicle 4. That is, the vehicle 4 expends energy downhill and draws that energy in the uphill phase. Semitrailers and rolling stock (rail cars) or the like will require a push algorithm to ensure the safety of the (truck/tractor/locomotor). This would constitute for road transport a slight flex in the draw pin measured by laser/light or a device which would dictate the amount of acceleration required by the trailer(s) to balance push/pull on the preceding vehicle 4 and for rail the amount of push or pull depending on the phase of operation. Using the distributed power system 1 where the steam turbine 24 is enclosed by a liquid heat exchanger 23 or the like is also used to generate power. The combustion chamber 12 and the heat exchanger 23 in the reverse flow exhaust would have to produce sufficient heat to provide steam. The system EMC²_{TM} sets a burn start time and duration to generate sufficient energy to efficiently continue the journey, minimizing energy usage.

The system 1 uses power generation, storage and power transmission. To measure generated energy and send this information to Power Rail/Road (PRR_{TM}) when in cell range or at power transmission zones via internet protocols (IP) and to produce a power bill of the energy generated or consumed. The EMC²_{TM} for a city transit the power pack is powered to a predetermined level to accelerate, for example, 100t to 100 km/hr and retain 25% energy - or power needs are optimized for the journey profile with inputs from EMC²_{TM}. Power storage units will be an integral part of the system both in built up and isolated areas.

The EMC²_{TM} plots the planned course predicting and optimizing engine/turbine burn times, relative to power transmission zones, and the optimum energy upload/download at power transmission zones. The EMC²_{TM} would receive regular database updates for the most recent power transmission zone completion for journey planning to optimize routes and the EMC²_{TM} saves previous routes and optimizes route power management profiles based on newly constructed power transmission zones (this information is updated wirelessly or by power transmission zones via Internet Protocol (IP)). The device will be capable of impulse (very high rate) power transmission at transmission zones. The power (pack) storage unit may be a contra rotating, high energy fly wheel using magnetic bearings to reduce energy loss through friction, hydromechanical or other efficient/applicable power storage unit. A drive shaft/power take-off (PTO) from the vehicle engine and also the load carrying device, will generate electricity through a generator/electric motor. Power generation may be augmented by a torque converter 6 to ensure maximum energy capture transmitting this energy through an accumulator to a final drive to the power (pack) storage unit 2. Traction control on wheels 9 will signal differential locks to maximize power generation (stopping phase) and acceleration. Integrated drive gear (IDG) will be built into generator/electric drive motors to ensure optimum motor revolution over varying vehicle speeds. Vehicle accelerator and foot brake will demand a g-force acceleration/deceleration augmented by an acceleration/deceleration signal transferred to the power generator/s to sequence the amount of energy required in the acceleration phase and the amount of power generation in the stopping phase. EMC²_{TM} will transmit energy requirements (upload/download) at power transmission zones say every 200 kms on level transits and on both uphill and downhill transits. A fast deploying hydraulic/electrical Power Transmission Contact (PTC), Figure 4, to overhead or side transmission lines 22 will facilitate very fast rate power transmission to and from the vehicle 4, power storage unit 2. In road and/or on vehicle light/radar distance measuring equipment to position the PTC for accurate power line targeting. A PTC pressure sensor will be incorporated to assist in optimum power line/PTC contact.

Preferably an Energy Management Control Computer (EMC²_{TM}) which has two components, a power management system such that when energy is scheduled for storage in the power storage unit and another entity demands power then power on demand is directed to the device demanding the energy or if there is excess energy that this energy is directed by the energy management system for storage in the power storage unit and vice versa. Power storage units will include but not be limited to a. Fly wheel or, b. Hydro power generation and storage system.
a. The fly wheel PSU (power storage unit) may be a contra-rotating fly wheel with various configurations of generator/drive motors, the one to accept power through the drive and the other to generate power when demanded and include an integrated power management system.
b. The hydro electrical system will use the potential energy of water to store power the challenge being to enhance the energy in energy out equation to reduce inefficiencies and maximize the power generated compared to the energy stored.
   I. The hydro power generation and storage unit may include:
      a. a constructed power storage tower, or
      b. by using suitable terrain with reservoirs and piping between them to provide sufficient power generation/storage as demand may require.
   II. To achieve this, a Focused Turbine Drive Technology system (FTDT_{TM}) will be employed where injector nozzles are used to specifically target receptacles on the turbine drive shaft, receptacles will be positioned to receive the injected water as the previous one rotates out of the injector flow.
   III. The hydro power generation and energy storage device will include integrated dual axial flow generator/lift pumps to ensure efficient water flow/power storage. Suitable redundancy will be included in this system to enable efficient maintenance with minimal/no downtime.

Such a system 1 would provide fuel savings per unit of payload on surface transport and the storage and transmission of power, autonomous navigation by rail freight/passenger cars to the destination avoiding lengthy delays in switching yards. Lower labour costs and the primary power generation turbines have only two primary moving parts each compared to an internal combustion engine (ICE) resulting in lower maintenance costs and longer mean time between failure. Also, efficient primary power generation when incorporating the steam turbine. The gas turbine can use many different fuels with minimum adjustment and ultimately hydrogen a clean energy.

Although the invention has been described with reference to specific examples, it will be appreciated by those skilled in the art that the invention may be embodied in many other forms falling within the scope of the appended claims.

## Claims

1. A distributed power generation system (1) for a surface transport vehicle (4) having at least two wheels (9), including:
a primary power generation device (3) including:
a compressor (10) operable to receive a gas;
a combustion chamber (12) to receive and ignite a fuel and heat said gas exiting said compressor;
a first gas turbine (13) to receive said heated gas and generate energy for driving said surface transport (4);
a first heat exchanger (23); and a second heat exchanger (25); and
a second gas turbine (15) cooperating with the compressor (10); and a third gas turbine;
**characterised in that** said first heat exchanger (23) is a liquid heat exchanger (23) for heating liquid to steam used in a steam turbine (24) of the primary power generation device (3), and **in that** said heated gas leaving said first gas turbine (13) is directed past the outside of said combustion chamber (12) to add heat to the liquid heat exchanger (23) for heating the liquid, said heated gas then being passed through the second gas turbine (15) cooperating with the compressor (10), and the heated gas leaving the second gas turbine (15) is returned to the combustion chamber (12) or vented through the second heat exchanger (25) and passed through a third gas turbine operating in cooperation with said first gas turbine (13), the second heat exchanger (25) and the third gas turbine being of the primary power generation device (3);
a secondary power generation device (5) including:
an electrical generator/traction motor (7) which is capable of receiving energy for driving said at least two wheels (9), and/or generating energy by obtaining torque from said at least two wheels (9) for storage and/or transmission; and
a connection means (8) attached between said electrical generator/traction motor (7) and said at least two wheels (9) to deliver said torque to said electrical generator/traction motor (7); and
a power storage unit (2) to store energy received from the primary (3) and/or secondary (5) power generation devices; and wherein said system (1) is adapted to capture energy during a braking phase of said at least two wheels of said surface transport vehicle (4) for storage in preparation for transmission.

2. The distributed power generation system for a surface transport vehicle according to claim 1, wherein said power storage unit (2) includes a contra rotating high energy fly wheel to be used by the surface transport (4) in motion to transmit energy to a power grid.

3. The distributed power generation system for a surface transport vehicle according to claim 1, wherein said heated liquid from the liquid heat exchanger (23) is adapted to drive the steam turbine (24).

4. The distributed power generation system for a surface transport vehicle according to claim 3, wherein the steam turbine (24) is enclosed by said first heat exchanger (23) and located co-axially within the combustion chamber (12).

5. The distributed power generation system for a surface transport vehicle according to claim 4, wherein said first heat exchanger (23) forms the wall of the combustion chamber (12).

6. The distributed power generation system for a surface transport vehicle according to claim 2, including means to transfer excess energy to other surface transport (4) from a power storage unit (2).

7. The distributed power generation system for a surface transport vehicle according to claim 6, wherein the excess energy is transferred to a track or roadside power storage unit.

8. The distributed power generation system for a surface transport vehicle according to claim 7, wherein said roadside power storage unit includes a hydro power storage tower and/or a hydro electrical power system using suitable terrain, reservoirs and piping for energy storage.

9. The distributed power generation system for a surface transport vehicle according to claim 1, further comprising a torque converting mechanism (6) connected between said power storage unit (2) and said electrical generator/traction motor (7) which is capable of transferring power from said electrical generator/traction motor (7).

## Patentansprüche

1. Verteiltes Energieerzeugungssystem (1) für ein Oberflächen-Transportfahrzeug (4) mit mindestens zwei Rädern (9), umfassend:
eine primäre Energieerzeugungsvorrichtung (3), umfassend:
einen Kompressor (10), der unter Aufnahme eines Gases betrieben werden kann;
eine Verbrennungskammer (12) zur Aufnahme und Verbrennung eines Brennstoffes und zur Erwärmung des den Kompressor verlassenden Gases;
eine erste Gasturbine (13) zur Aufnahme des erwärmten Gases und zur Erzeugung von Energie zum Antrieb des Oberflächen-Transportfahrzeugs (4);
einen ersten Wärmetauscher (23);
einen zweiten Wärmetauscher (25), und
eine zweite Gasturbine (15), die mit dem Kompressor (10) zusammenarbeitet; und
eine dritte Gasturbine;
**dadurch gekennzeichnet, dass**
es sich beim ersten Wärmetauscher (23) um einen Flüssigkeitswärmetauscher (23) zur Erwärmung einer Flüssigkeit zu Dampf, der in der Dampfturbine (24) der primären Energieerzeugungsvorrichtung (3) verwendet wird, handelt und dass das die erste Gasturbine verlassende erwärmte Gas von der Verbrennungskammer (12) nach außen geleitet wird, um den Flüssigkeitswärmetauscher (23) zur Erwärmung der Flüssigkeit mit zusätzlicher Wärme zu versehen, wobei das erwärmte Gas anschließend durch die zweite Gasturbine (15), die mit dem Kompressor (10) zusammenarbeitet, geleitet wird und wobei das die zweite Gasturbine (15) verlassende erwärmte Gas in die Verbrennungskammer (12) zurückgeleitet oder durch den zweiten Wärmetauscher (25) abgelassen und durch eine dritte Gasturbine, die mit der ersten Gasturbine (13) zusammenarbeitet, geleitet wird, wobei der zweite Wärmetauscher (25) und die dritte Gasturbine zur primären Energieerzeugungsvorrichtung (3) gehören;
und eine zweite Energieerzeugungsvorrichtung (5), die folgendes umfasst:
einen elektrischen Generator/Traktionsmotor (7), der dazu befähigt ist, Energie zum Antreiben der mindestens zwei Räder (9) aufzunehmen und/oder Energie durch Empfangen eines Drehmoments von den mindestens zwei Rädern (9) zur Speicherung/oder zur Übertragung zu erzeugen; und
eine Verbindungseinrichtung (8), die zwischen dem elektrischen Generator/Traktionsmotor (7) und den mindestens zwei Rädern (9) angebracht ist, um das Drehmoment an den elektrischen Generator/Traktionsmotor (7) abzugeben; und
eine Energiespeichereinheit (2) zur Speicherung der von der primären (3) und/oder sekundären (5) Energieerzeugungsvorrichtung empfangenen Energie; und wobei dieses System (1) dazu geeignet ist, Energie während einer Bremsphase der mindestens zwei Räder des Oberflächen-Transportfahrzeugs (4) zur Speicherung in Vorbereitung für die Transmission aufzunehmen.

2. Verteiltes Energieerzeugungssystem für ein Oberflächen-Transportfahrzeug nach Anspruch 1, wobei die Energiespeichereinheit (2) ein sich in Gegenrichtung drehendes Hochenergie-Schwungrad umfasst, das von dem in Bewegung befindlichen Oberflächen-Transportfahrzeug (4) zu verwenden ist, um Energie auf ein Energienetz zu übertragen.

3. Verteiltes Energieerzeugungssystem für ein Oberflächen-Transportfahrzeug nach Anspruch 1, wobei die erwärmte Flüssigkeit aus dem Flüssigkeitswärmetauscher (23) dazu geeignet ist, die Dampfturbine (24) anzutreiben.

4. Verteiltes Energieerzeugungssystem für ein Oberflächen-Transportfahrzeug nach Anspruch 3, wobei die Dampfturbine (24) vom ersten Wärmetauscher (23) umschlossen ist und sich in koaxialer Ausrichtung innerhalb der Verbrennungskammer (12) befindet.

5. Verteiltes Energieerzeugungssystem für ein Oberflächen-Transportfahrzeug nach Anspruch 4, wobei der erste Wärmetauscher (23) die Wand der Verbrennungskammer (12) bildet.

6. Verteiltes Energieerzeugungssystem für ein Oberflächen-Transportfahrzeug nach Anspruch 2, umfassend eine Einrichtung zur Übertragung von überschüssiger Energie auf ein anderes Oberflächentransportfahrzeug (4) aus einer Energiespeichereinheit (2).

7. Verteiltes Energieerzeugungssystem für ein Oberflächen-Transportfahrzeug nach Anspruch 6, wobei die überschüssige Energie auf eine gleis- oder straßenseitige Energiespeichereinheit übertragen wird.

8. Verteiltes Energieerzeugungssystem für ein Oberflächen-Transportfahrzeug nach Anspruch 7, wobei die straßenseitige Energiespeichereinheit einen Hydro-Energiespeicherturm und/oder ein Hydro-Elektroenergiesystem unter Verwendung geeigneter Gelände, Behälter und Rohre zur Energiespeicherung umfasst.

9. Verteiltes Energieerzeugungssystem für ein Oberflächen-Transportfahrzeug nach Anspruch 1, ferner umfassend einen Drehmoment-Umwandlungsmechanismus (6), der zwischen der Energiespeichereinheit (2) und dem Elektrogenerator/Traktionsmotor (7) angeschlossen ist und dazu befähigt ist, Energie vom Elektrogenerator/Traktionsmotor (7) zu übertragen.

## Revendications

1. Système de génération de puissance distribuée (1) pour un véhicule de transport de surface (4) ayant au moins deux roues (9), comprenant :
un dispositif de génération de puissance principale (3) comprenant :
un compresseur (10) pouvant fonctionner pour recevoir un gaz ;
une chambre de combustion (12) pour recevoir et allumer un combustible et chauffer ledit gaz sortant dudit compresseur ;
une première turbine à gaz (13) pour recevoir ledit gaz chauffé et générer de l'énergie pour entraîner ledit transport de surface (4) ;
un premier échangeur de chaleur (23) ; et un second échangeur de chaleur (25) ; et
une deuxième turbine à gaz (15) coopérant avec le compresseur (10) ; et une troisième turbine à gaz ;
**caractérisé en ce que** :
ledit premier échangeur de chaleur (23) est un échangeur de chaleur de liquide (23) pour chauffer du liquide en vapeur d'eau utilisée dans une turbine à vapeur (24) du dispositif de génération de puissance principale (3) et **en ce que** ledit gaz chauffé sortant de ladite première turbine à gaz (13) est dirigé au-delà de l'extérieur de ladite chambre de combustion (12) pour ajouter de la chaleur à l'échangeur de chaleur de liquide (23) pour chauffer du liquide, ledit gaz chauffé passant ensuite par la deuxième turbine à gaz (15) coopérant avec le compresseur (10) et le gaz chauffé sortant de la deuxième turbine à gaz (15) revient vers la chambre de combustion (12) ou est évacué par le second échangeur de chaleur (25) et passe par une troisième turbine à gaz fonctionnant en coopération avec ladite première turbine à gaz (13), le second échangeur de chaleur (25) et la troisième turbine à gaz faisant partie du dispositif de génération de puissance principale (3) ;
un dispositif de génération de puissance secondaire (5) comprenant :
un générateur électrique/moteur de traction (7) qui peut recevoir de l'énergie pour entraîner lesdites au moins deux roues (9) et/ou générer de l'énergie en obtenant le couple à partir desdites au moins deux roues (9) pour le stockage et/ou la transmission ; et
des moyens de raccordement (8) fixés entre ledit générateur électrique/moteur de traction (7) et lesdites au moins deux roues (9) afin de délivrer ledit couple audit générateur électrique/moteur de traction (7) ; et
une unité de stockage de puissance (2) pour stocker l'énergie reçue des dispositifs de génération de puissance principale (3) et/ou secondaire (5) ; et dans lequel ledit système (1) est adapté pour capturer l'énergie pendant une phase de freinage desdites au moins deux roues dudit véhicule de transport de surface (4) pour le stockage en préparation pour la transmission.

2. Système de génération de puissance distribuée pour un véhicule de transport de surface selon la revendication 1, dans lequel ladite unité de stockage de puissance (2) comprend un volant à haute énergie contrarotatif destiné à être utilisé par le transport de surface (4) en mouvement afin de transmettre l'énergie à un réseau électrique.

3. Système de génération de puissance distribuée pour un véhicule de transport de surface selon la revendication 1, dans lequel ledit liquide chauffé provenant de l'échangeur de chaleur liquide (23) est adapté pour entraîner la turbine à vapeur (24).

4. Système de génération de puissance distribuée pour un véhicule de transport de surface selon la revendication 3, dans lequel la turbine à vapeur (24) est enfermée par ledit premier échangeur de chaleur (23) et positionnée de manière coaxiale à l'intérieur de la chambre de combustion (12).

5. Système de génération de puissance distribuée pour un véhicule de transport de surface selon la revendication 4, dans lequel ledit premier échangeur de chaleur (23) forme la paroi de la chambre de combustion (12).

6. Système de génération de puissance distribuée pour un véhicule de transport de surface selon la revendication 2, comprenant des moyens pour transférer l'énergie en excès vers l'autre transport de surface (4) à partir d'une unité de stockage de puissance (2).

7. Système de génération de puissance distribuée pour un véhicule de transport de surface selon la revendication 6, dans lequel l'énergie en excès est transférée à un camion ou une unité de stockage de puissance routière.

8. Système de génération de puissance distribuée pour un véhicule de transport de surface selon la revendication 7, dans lequel ladite unité de stockage de puissance routière comprend une tour de stockage d'énergie hydraulique et/ou un système d'hydroélectricité utilisant un terrain approprié, des réservoirs et des tuyaux pour le stockage de l'énergie.

9. Système de génération de puissance distribuée pour un véhicule de transport de surface selon la revendication 1, comprenant en outre un mécanisme de conversion de couple (6) raccordé entre ladite unité de stockage de puissance (2) et ledit générateur électrique/moteur de traction (7) qui peut transférer la puissance à partir dudit générateur électrique/moteur de traction (7).
